# EUROPÄISCHE PATENTSCHRIFT

(11) **EP 1 967 061 B1**
(45) Veröffentlichungstag und Bekanntmachung des Hinweises auf die Patenterteilung: **09.09.2015**
(21) Anmeldenummer: 07122735.9
(22) Anmeldetag: 10.12.2007
(51) Int. Cl.: A01F 12/40, B02C 18/14

(54) **Häcksler und damit ausgestattete Erntemaschine**
Shredder and harvesting machine fitted with shredder
Hache-paille et moissonneuse équipée de celle-ci

(30) Priorität: 07.03.2007 DE 102007011374
(43) Veröffentlichungstag der Anmeldung: 10.09.2008
(73) Patentinhaber: CLAAS Selbstfahrende Erntemaschinen GmbH, 33428 Harsewinkel (DE)
(72) Erfinder: Esken, Dirk, 59494 Soest-Meckingsen (DE); Niermann, Martin, 33428 Harsewinkel (DE)

(56) Entgegenhaltungen:
- EP-A- 1 219 163
- EP-A- 1 642 490
- EP-A1- 1 350 424
- BE-A- 526 170
- US-A1- 2002 113 154

## Beschreibung

Die vorliegende Erfindung betrifft einen Mähdrescher mit einem den Axialabscheider nachgrondruten Häcksler.

Mähdrescher mit einem Häcksler, der ausgedroschenes Stroh zerkleinert, bevor dieses wieder auf dem Feld ausgebracht wird, sind zum Beispiel aus DE 100 63 554 A1 und aus EP 1 642 490 A1 bekannt. Diese bekannten Mähdrescher haben jeweils ein Schüttlersieb, auf dem kleinteilige Erntegutbestandteile vom Stroh abgeschieden werden, bevor das zu zerkleinernde Stroh eine rückwärtige Kante des Schüttlersiebs passiert und dem Häcksler zugeführt wird. Diese Kante erstreckt sich über einen beträchtlichen Teil der Breite des Mähdreschers. Die Strohzufuhn zun Häcksler erfolgt im Allgemeinen nicht gleichmäßig über die gesamte Breite der Kante hinweg, sondern variiert stark und unvorhersagbar. Wenn der Mähdrescher auf geneigtem Untergrund eingesetzt wird, neigt das Stroh auf dem Schüttlersieb dazu, der Hangneigung folgend sich an der Talseite des Mähdreschers zu sammeln. Bei einem Häcksler mit gepaarten, um eine vertikale Achse rotierenden Messertrommeln, wie in DE 100 63 554 A1 dargestellt, hat eine solche Ungleichverteilung des Strohs am Eingang des Häckslers nur wenig Einfluss auf die Verteilung und die Flussrate des gehäckselten Strohs an dessen Ausgang. Ein Häcksler mit um eine horizontale Achse rotierender Messerwalzewie aus EP 1 642 490 A1 bekannt, hat zwar den Vorteil eines einfacheren, kompakteren Aufbaus, doch ergibt sich hier das Problem, dass eine ungleichmäßig über die Breite des Häckslereingangs verteilte Strohzufuhr zu einer entsprechend ungleichmäßigen Verteilung des gehäckselten Materials am Ausgang des Häckslers und letztlich auch zu einer ungleichmäßigen Verteilung des gehäckselten Materials auf dem Feld führt

EP 1 350 424 beschreibt einen Mähdrescher mit einem dem Axialabscheider nachgeordneten Häcksler mit einem drehangetriebenen, Messer tragenden Rotor und einem den Rotor und die Messer umgebenden Gehäuse und einer dem Häcksler nachgeordneten Verteileinrichtung.

US 2002/113154 beschreibt einen Häcksler zum mit rotierenden Messern, die in dem Mittelbereich einen Kreis mit größerem Radius als in den Endbereichen beschreiben. Ziel der vorliegendem Erfindung ist, einen Mähdrescher mit einem dem Axialabscheider nachgeordneten Häcksler mit um eine horizontale Achse drehbarer Messerwalze so zu verbessern, dass eine gleichmäßigere Ausbringung des damit gehäckselten Materials erreichbar ist.

Die Aufgabe wird dadurch gelöst, dass bei einem Häckslers mit wenigstens einem drehangetriebenen, Messer tragenden Rotor und einem den Rotor und die Messer umgebenden Gehäuse, wobei das Gehäuse entlang einer Drehachse des Rotors einen ersten Endbereich, einen Mittelbereich und ienen zweiten Endbereich aufweist, die rotierenden Messer in dem Mittelbereich einen Kreis mit größerem Radius beschreiben als in den Endbereichen. Eine solche Gestaltung führt dazu, dass das Häckslelgut, unabhängig davon, wo es in das Gehäuse eingetreten ist, dazu neigt, sich in dem Mittelbereich zu sammeln.

Indem das Häckselgut im Mittelbereich des Häckslers konzentriert wird, wird eine eventuell ungleichmäßige Verteilung des Strohs am Eingang des Häckslers ausgeglichen; d.h. der Querschnitt des HäckselgutStroms, der den Häcksler verlässt, hängt nur wenig von der Verteilung des Strohs am Eingang des Häckslers ab. Ein solcher Materialstrom ist leichter gleichmäßig auf dem Feld zu verteilen als einer mit zufällig oder je nach Neigung eines befahrenen Hangs veränderlichem Querschnitt.

Eine in axialer Richtung des Rotors ausgedehnte Einlassöffnung zum Zuführen von zu häckselndem Material und eine Auslassöffnung zum Ausgeben des gehäckselen Materials sind vorzugsweise an einer Umfangsfläche des Gehäuses vorgesehen.

Das Gehäuse hat auf wenigstens einem Teil seines Umfangs in dem Mittelbereich einen größeren Radius hat als in den Edbereichen. Dadurch wird begünstigt, dass von der Fliehkraft gegen das Gehäuse gedrücktes Häckselmaterial dem Mittelbereich des Häckslers zustrebt.

Der Radius des Gehäuses auf besagtem Teil seines Umfanges nimmt vorzugsweise von den Endbereichen zum Mittelbereich kontinuierlich zu.

Das Gehäuse kann auf wenigstens besagtem Teil seines Umfanges im axialen Schnitt insbesondere tonnenförmig oder doppelkegelförmig sein.

Um trotz der unterschiedlichen Radien der von den Messern beschriebenen Kreise dennoch in den Endbereichen und dem Mittelbereich identische Messer verwenden zu können, kann vorgesehen werden, dass der Rotor in dem Mittelbereich einen größeren Durchmesser als in den Endbereichen hat bzw. dass die Breite eines Freiraums zwischen Rotor und Gehäuse im Mittelbereich im Wesentlichen genauso groß wie in den Endbereichen ist.

Um das während des Häckselns dem Mittelbereich zustrebende Häckselgut aufrehmen zu können, kann es auch sinnvoll sein, dass der Freiraum zwischen Rotor und Gehäuse im Mittelbereich größer als in den Endbereichen ist; in diesem Fall sind auch die Messer zweckmäßigerweise in dem Mittelbereich länger als in den Endbereichen

Gegenstand der Erfindung ist ferner eine selbstfahrende Erntemaschine mit Mitteln zum Aufteilen eines Erntegutstromes in zwei Teilströme, die einen Häcksler wie oben definiert zum Zerkleinern des Materials eines der Teilströme aufweist.

Weitere Merkmale und Vorteile der Erfindung werden deutlich anhand der nachfolgenden Beschreibung von Ausführungsbeispielen unter Bezugnahme auf die beigefügten Figuren. Es zeigen:
- Fig. 1: eine schematische Darstellung eines Mähdreaschers mit einem erfindungsgemäßen Häcksler;
- Fig. 2: einen schematischen radialen Schnitt durch den Häcksler; und
- Fig. 3 bis 5: schematische axiale Schnitte durch verschiedene Ausgestaltungen des Häckslers entlang der in Fig. 2 mit X bezeichneten Ebene.

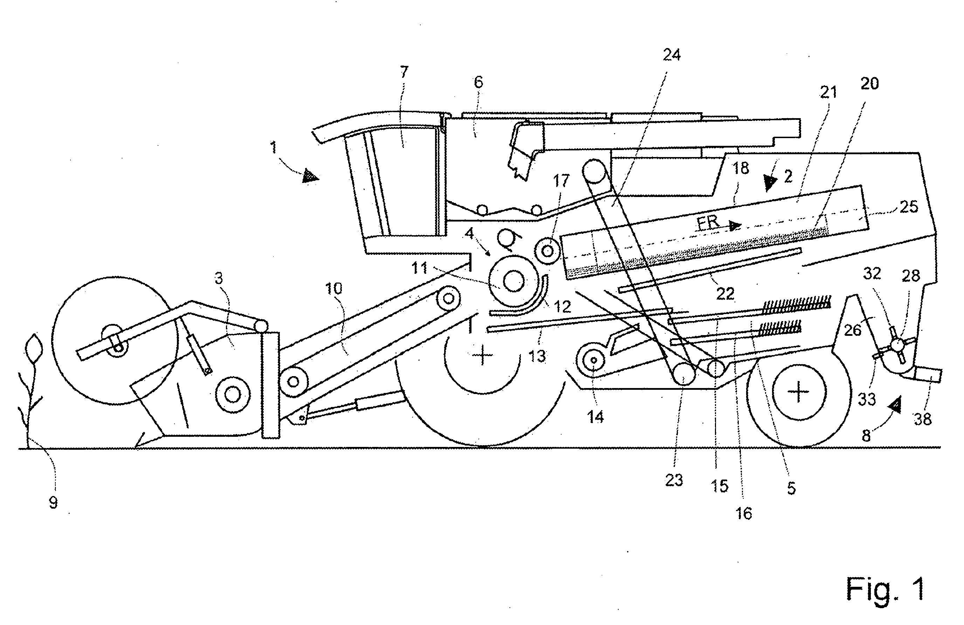

Der in Fig. 1 schematisch dargestellte Mähdrescher 1 hat als wesentliche Komponenten ein Schneidwerk 3 zum Schneiden und Aufnehmen von Erntegut 9, eine Drescheinrichtung 4, eine Reinigungseinrichtung 5', einen Axialabscheider 2, einen Korntank 6, eine Fahretkabine 7 sowie einen dem Axialabscheider 2 hadhgeordneten Strohhäcksler 8. Das vom Schneidwerk 3 abgeschnittene Erntegut 9 gelangt über einen Schragförderkanal 10 zu der nach dem Tangentialprinzip arbeitenden Drescheinrichtung 4. Diese umfasst eine Dreschtrommel 11 und einen zugeordneten Dreschkorb 12. Die am Dreschkorb 12 abgeschiedenen Erntegutbestandteile werden über einen Förderboden 13 zu der Reinigungseinrichtung 5 geleitet, die hier ein Gebläse 14 und ein Ober- und Untersieb 15 bzw. 16 umfasst.

Das den Dreschkorb 12 in tangentialer Richtung verlassene Korn-Kurzstrohgemisch wird zum Axialabscheider 2 befördert. Eine parallel zur Dreschtrommel 11 angeordnete rotierende Wendetrommel 17 unterstützt den Fördervorgang. Der Axialabscheider 2 ist in Längsrichtung des Mähdreschers 1 angeordnet und besteht im Wesentlichen aus einem feststehenden, in Förderrichtung FR ansteigenden zylindrischen Gehäuse 18, in dem ein drehbar angetriebener, nicht dargestellter Rotor gelagert ist. Das Gehäuse 18 weist einen unteren Bereich mit Abscheiderosten 20 und einen geschlossenen oberen Deckbereich 21 mit an der Innenseite angeordneten Leiteinrichtungen zur Unterstützung der Förderbewegung des Erntegutes auf. Der Umfangsbereich des Rotors ist mit Zinken oder Leisten versehen, die den Abscheidevorgang intensivieren. An den Abacheiderosten 20 werden die im Erntegutgemisch enthaltenen Körner sowie Anteile von Kurzstroh und Spreu abgeschieden, Sie gelangen über den darunter liegenden Rücklaufboden 22 zur Reinigungseinrichtung 5. Die in letzterer gereinigten Körner werden über eine horizontale Förderschnecke 23 und einen Elevator 24 in den Korntank 6 gefördert.

Das Stroh wird im Axialabscheider 2 zu einer rückwärtigen Kante 25 desselben gefördert. Der Axialabscheider hat gegenüber dem eingangs erwähnten Schüttlersieb den Vorteil, dass die Verteilung des Strohs über den Umfang des Axialabscheiders im Wesentlichen unabhängig davon ist, ob der Mähdrescher auf ebenem oder auf seitlich abschüssigem Untergrund fährt. Allerdings hat die Zylinderform des Axialabscheiders und der daraus resultierende, im Wesentlichen halbkreisförmige Verlauf der Kante 25 die Folge, dass der Strom des Strohs pro (in horizontaler Richtung gemessener) Breiteneinheit an den Enden der Kante 25 stärker ist als in ihrer Mitte.

Von der rückwärtigen Kante 25 fällt das Stroh in einen Trichter 26, an dessen Boden derStrohhäcksler 8 angeordnet ist. Aufgrund der Neigung der Strohhalme, untereinander zu verhaken, rieselt das Stroh nicht zeitlich und örtlich kontinuierlich entlang der gesamten Kante 25 herab, sondern starker Strohfluss und schwacher Strohfluss sind entlang der Kante 25 zeitlich und örtlich zufallsverteilt.

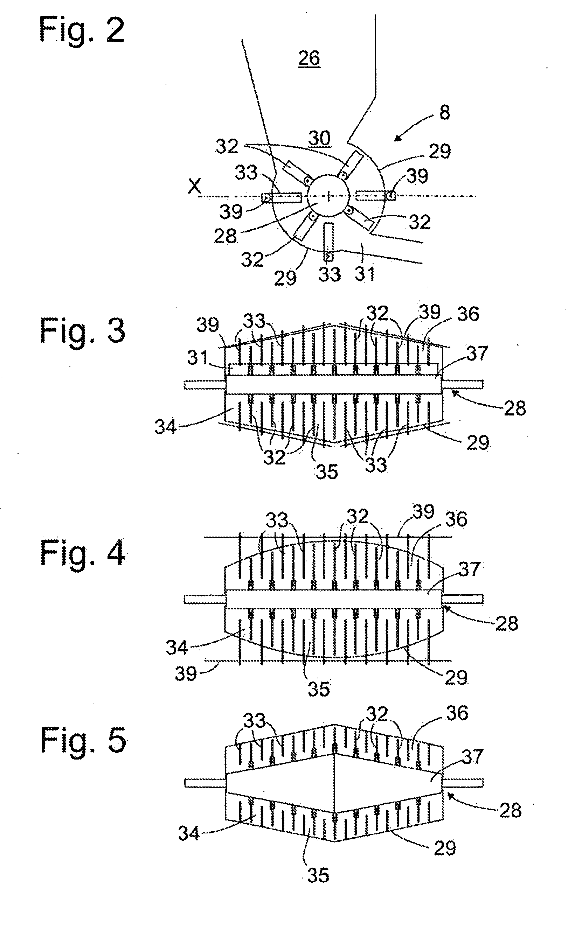

Der Strohhäcksler 8 umfasst einen mit Messern 32 bestückten um eine horizontale, quer zur Fahrtrichtung des Mähdreschers 1 orientierte Achse drehbaren Rotor,18 und ein Gehäuse 29, das, wie in dem Schnitt der Fig. 2 zu erkennen, den Rotor 28 auf wenigstens einem Teil seines Umfanges kreisbogenförmig umgibt. Eine Einfüllöffnung 30 des Häckslers erstreckt sich über im Wesentlichen die gesamte Länge des Rotors 28. Je nachdem, von welcher Stelle der Kante 25 und mit welchem Impuls quer zur Fahrtrichtung das Stroh herabfällt, kann es auf einen mittleren Bereich 35 oder einen der axialen Endbereiche 34, 36 (siehe Fig. 3 bis 5) des Rotors 28 auftreffen, wobei aufgrund der Zylinderform des Axialabscheiders die Wahrscheinlichkeit, dass es in einen der Endbereiche gelangt, höher als die Wahrscheinlichkeit ist, dass es in den Mittelbereich gelangt.

In dem Strohhäcksler 8 wird das Stroh von den rotierenden Messern 32 des Rotors zerkleinert. Die Messer 32 können dabei unterstützt werden von am Gehäuse 29 verstellbaren Messern 33. Diese sind hier in einer in Zwischenräume zwischen den Rotormessern 32 eingreifenden Stellung dargestellt. Sie sind aus dieser Stellung um eine Welle 39 in eine Stellung außerhalb des Gehäuses 29 schwenkbar, um die zum Betrieb des Häckslers benötigte Antriebesleistung zu verringern, falls die Messer 32 allein eine hinreichende Zerkleinerung bewirken. Indem die Messer 32 auf zur Mitte des Häckslers hin größer werdenden Kreisbahnen rotieren, üben sie auf das Stroh einen zur Mitte hin gerichteten Zug aus, so dass das Stroh beim Durchgang durch den Häcksler dem Mittelbereich 35 zustrebt.

In Folge der hohen Drehzahl des Rotors 28 von im Allgemeinen mehreren tausend Umdrehungen pro Minute ist das Stroh im Häcksler einer beträchtlichen Fliehkraft ausgesetzt. Das Gehäuse 29 ist im axialen Schnitt so geformt, dass auch diese Fliehkraft dazu beiträgt, das gehäckselte Stroh von den Endbereichen 34, 36 in den Mittelbereich 35 des Häckslers 8 zu treiben. Das heißt, obwohl der Zufluss des Strohs zum Häcksler ungleichmäßig zufallsverteilt und in den Endbereichen konzentriert ist, wird an der Auslassöffnung 31 des Häckslers ein örtlich und zeitlich vergleichmäßigter, zur Mitte hin verdichteter Strom von Häckselgut erhalten.

Eine erste Ausgestaltung eines solchen Gehäuses 29 ist in Fig. 3 in einem axialen Schnitt entlang der in Fig. 2 mit X bezeichneten Ebene gezeigt. Man erkennt, dass sich das Gehäuse 29 im Wesentlichen aus zwei kegelstumpfförmigen Abschnitten zusammensetzt, die an ihren großen Grundflächen miteinander verschmolzen sind.

Der Rotor 28 hat einen zylindrischen Grundkörper 37, an dem die Messer 32 gelenkig befestigt sind. Durch die Drehung des Rotors 28 und die daraus resultierende Fliehkraft sind die Messer 32 in eine radial auswärts gerichtete Stellung, wie in Fig. 3 gezeigte beaufschlagt; die gelenkige Aufhängung gibt ihnen jedoch die Möglichkeit, auszuweichen, wenn zwischen ihnen und den stationären Messern 33 gefangenes Häckselgut, z.B. aufgrund von darin enthaltenen Fremdkörpern, zu hart oder zu dicht ist, um durchschlagen zu werden.

Die Länge der Messer 32, 33 ist entsprechend ihrer axialen Position im Häcksler 8 unterschiedlich: sie ist so bemessen, dass die Spitzen aller rotierenden Messer 32 jeweils einen gleichen Abstand zum Gehäuse 29 bzw. die Spitzen der ortsfesten Messer 33 einen gleichen Abstand zum Grundkörper 37 des Rotors 28 haben. Die Wellen 39 zum Steuern der Verstellung der Messer 33 erstrecken sich jeweils parallel zur Außenseite des Gehäuses 29 über die Hälfte von dessen Breite.

Wieder bezogen auf Fig. 1 ist an dem Ausgang des Häckslers 8 eine Verteilereinrichtung 38 angeschlossen, die das Häckselgut auf einer Spurbreite entsprechend der Breite des vom Schneidwerk 3 gemähten Streifens ausstreut. Bei der Verteilereinrichtung kann es sich zum Beispiel um einen Radialverteiler handeln, in welchem das Häckselgut auf eine rotierende Platte aufgestreut und von dieser durch Zentrifugalkraft in alle Richtungen fortgeschleudert wird.

Fig. 4 zeigt eine alternative Ausgestaltung des Häckslers in einem zu Fig. 3 analogen Schnitt. Hier hat das Gehäuse 29 im Wesentlichen die Gestalt einer Tonne oder eines Rotationsellipsoids. Diese Gehäuseform führt dazu, dass die Neigung des Häckselgutes, zur Gehäusemitte zu wandern, an den Enden des Gehäuses 29 am stärksten ist und zur Mitte hin immer geringer wird. So kann das Häckselgut effizient in der Gehäusemitte zusammengeführt werden, ohne dass dort die Gefahr einer übermäßigen Verdichtung besteht.

Die Messer 33 sind hier jeweils an sich über die gesamte Breite des Gehäuses erstreckenden Wellen 39 befestigt. Alle Messer 33 sind gleich lang, aber der Anteil ihrer Länge, der im Inneren des Gehäuses 29 liegt, wird von den Enden zur Gehäusemitte hin immer größer.

Fig. 5 zeigt eine weitere Ausgestaltung in einem zu Fig. 3 analogen Schnitt. Die äußere Form des Gehäuses 29 ist hier dieselbe wie im Falle der Fig. 3. Der Grundkörper 37 des Rotors 28 ist hier jedoch nicht zylindrisch, sondern hat wie das Gehäuse 29 selbst die Form eines Doppelkegels, so dass die Breite des Freiraums zwischen dem Grundkörper 37 und dem Gehäuse 29 im Wesentlichen über die gesamte Breite des Häckslers hinweg die gleiche ist. Bei dieser Ausgestaltung können die Messer 32 bzw. 33 jeweils unabhängig von ihrer axialen Position im Häcksler 8 identisch und insbesondere gleich lang sein.

## Patentansprüche

1. Mähdrescher mit einem dem Axialabscheider nachgeordneten Häcksler mit wenigstens einem drehangetriebenen, Messer (32) tragenden Rotor (28) und einem den Rotor (28) und die Messer (32) umgebenden Gehäuse (29), wobei das Gehäuse (29) entlang einer Drehachse des Rotors (28) einen ersten Endbereich (34), einen Mittelbereich (35) und einen zweiten Endbereich (36) aufweist, und einer dem Häcksler nachgeordneten Verteileinrichtung **dadurch gekennzeichnet, dass** die rotierenden Messer (32) in dem Mittelbereich (35) einen Kreis mit größerem Radius beschreiben als in den Endbereichen (34, 36).

2. Mähdrescher nach Anspruch 1, **dadurch gekennzeichnet, dass** das Gehäuse (29) an einer Umfangsfläche eine in axialer Richtung des Rotors ausgedehnte Einlassöffnung (30) zum Zuführen von zu häckselndem Material und eine Auslassöffnung (31) zum Ausgeben des gehäckselten Materials aufweist.

3. Mähdrescher nach Anspruch 1 oder 2, **dadurch gekennzeichnet, dass** das Gehäuse (29) in dem Mittelbereich (35) auf wenigstens einem Teil seines Umfangs einen größeren Radius hat als in den Endbereichen (34, 36).

4. Mähdrescher nach Anspruch 3, **dadurch gekennzeichnet, dass** das Gehäuse (29) auf wenigstens besagtem Teil seines Umfangs im axialen Schnitt tonnenförmig ausgebildet ist.

5. Mähdrescher nach Anspruch 3, **dadurch gekennzeichnet, dass** das Gehäuse (29) auf wenigstens besagtem Teil seines Umfangs im axialen Schnitt doppelkegelförmig ausgebildet ist.

6. Mähdrescher nach einem der vorhergehenden Ansprüche, **dadurch gekennzeichnet, dass** der Rotor (28) in dem Mittelbereich (35) einen größeren Durchmesser als in den Endbereichen hat.

7. Mähdrescher nach einem der vorhergehenden Ansprüche, **dadurch gekennzeichnet, dass** ein Freiraum zwischen dem Rotor (28) und dem Gehäuse (29) in dem Mittelbereich (35) und in den Endbereichen (34, 36) im Wesentlichen die gleiche Breite hat.

8. Mähdrescher nach einem der vorhergehenden Ansprüche, **dadurch gekennzeichnet, dass** die Messer (32) in dem Mittelbereich (35) länger als in den Endbereichen (34, 36) sind.

9. Mähdrescher nach einem der vorhergehenden Ansprüche, **dadurch gekennzeichnet, dass** am Gehäuse (29) montierte Messer (33) zwischen unterschiedlich weit auf den Rotor (28) zu vorspringenden Stellungen verstellbar sind.

## Claims

1. A combine harvester having a chaff cutter which is arranged downstream of the axial separator and comprising at least one rotatably driven rotor (28) carrying blades (32) and a housing (29) surrounding the rotor (28) and the blades (32), wherein along an axis of rotation of the rotor (28) the housing (29) has a first end region (34), a central region (35) and a second end region (36), and a distributor device arranged downstream of the chaff cutter, **characterised in that** the rotating blades (32) describe a circle of a larger radius in the central region (35) than in the end regions (34, 36).

2. A combine harvester according to claim 1 **characterised In that** at a peripheral surface the housing (29) has an Inlet opening (30) extended In the axial direction of the rotor for the feed of material to be chopped and an outlet opening (31) for discharge of the chopped material.

3. A combine harvester according to claim 1 or claim 2 **characterised in that** the housing (29) is of a larger radius in the central region (35) on at least a part of its periphery than in the end regions (34, 36).

4. A combine harvester according to claim 3 **characterised in that** the housing (29) is of a barrel-shaped configuration in axial section on at least said part of its periphery.

5. A combine harvester according to claim 3 **characterised in that** the housing (29) is of a double cone-shaped configuration in axial section on at least said part of its periphery.

6. A combine harvester according to one of the preceding claims **characterised in that** the rotor (28) is of a larger diameter in the central region (35) than in the end regions.

7. A combine harvester according to one of the preceding claims **characterised In that** a free space between the rotor (28) and the housing (29) is substantially of the same width in the central region (35) and In the end regions (34, 36).

8. A combine harvester according to one of the preceding claims **characterised In that** the blades (32) are longer In the central region (35) than in the end regions (34, 36).

9. A combine harvester according to one of the preceding claims **characterised In that** blades mounted on the housing (29) are displaceable between positions projecting to differing extents towards the rotor (28).

## Revendications

1. Moissonneuse-batteuse comprenant un hache-paille disposé à la suite du séparateur axial et muni d'au moins un rotor (28) entraîné en rotation et portant des couteaux (32) et d'un carter (29) entourant le rotor (28) et les couteaux (32), le carter (29) comportant le long d'un axe de rotation du rotor (28) une première zone d'extrémité (34), une zone centrale (35) et une seconde zone d'extrémité (36), et comprenant un dispositif d'épandage disposé à la suite du hache-paille, **caractérisée en ce que** les couteaux rotatifs (32) décrivent un cercle de plus grand rayon dans la zone centrale (35) que dans les zones d'extrémité (34, 36).

2. Moissonneuse-batteuse selon la revendication 1, **caractérisée en ce que**, sur une surface périphérique, le carter (29) comporte une ouverture d'entrée (30), s'étendant dans la direction axiale du rotor, pour amener du produit à hacher, et une ouverture de sortie (31) pour évacuer le produit haché.

3. Moissonneuse-batteuse selon la revendication 1 ou 2, **caractérisée en ce que**, sur au moins une partie de sa périphérie, le carter (29) présente un rayon plus grand dans la zone centrale (35) que dans les zones d'extrémité (34, 36).

4. Moissonneuse-batteuse selon la revendication 3, **caractérisée en ce que**, sur au moins ladite partie de sa périphérie, le carter (29) présente, en coupe axiale, la forme d'un tonneau.

5. Moissonneuse-batteuse selon la revendication 3, **caractérisée en ce que**, sur au moins ladite partie de sa périphérie, le carter (29) présente, en coupe axiale, la forme d'un double cône.

6. Moissonneuse-batteuse selon une des revendications précédentes, **caractérisée en ce que** le rotor (28) possède un plus grand diamètre dans la zone centrale (35) que dans les zones d'extrémité.

7. Moissonneuse-batteuse selon une des revendications précédentes, **caractérisée en ce qu'**un espace libre entre le rotor (28) et le carter (29) possède sensiblement la même largeur dans la zone centrale (35) et dans les zones d'extrémité (34, 36).

8. Moissonneuse-batteuse selon une des revendications précédentes, **caractérisée en ce que** les couteaux (32) sont plus longs dans la zone centrale (35) que dans les zones d'extrémité (34, 36) .

9. Moissonneuse-batteuse selon une des revendications précédentes, **caractérisée en ce que** des couteaux (33) montés sur le carter (29) sont réglables entre des positions où ils font saillie sur des distances différentes en direction du rotor (28).
